Europäisches Patentamt

European Patent Office

Office européen des brevets

(11) Numéro de publication: **0 285 504**
A1

# (12) DEMANDE DE BREVET EUROPEEN

(21) Numéro de dépôt: 88400708.9

(22) Date de dépôt: 23.03.88

(51) Int. Cl.⁴: **F 28 D 7/16**
F 28 D 7/06, F 28 F 9/00

(30) Priorité: 25.03.87 FR 8704165

(43) Date de publication de la demande:
05.10.88 Bulletin 88/40

(84) Etats contractants désignés: **DE ES GB IT**

(71) Demandeur: **VALEO**
**64 Avenue de la Grande Armée**
**F-75017 Paris (FR)**

(72) Inventeur: **Simonin, Michel**
**11, rue Jean Monnet**
**F-78180 Montigny-le-Bretonneux (FR)**

(54) **Echangeur de chaleur, notamment pour le refroidissement de l'air de suralimentation du moteur d'un véhicule automobile.**

(57) L'échangeur de chaleur comprend un caisson formé par exemple d'un bac (12) et d'un couvercle (13), enfermant un faisceau de tubes (1) et définissant un passage pour l'air à refroidir entre des tubulures (20) d'entrée et de sortie. Le courant d'air traverse le faisceau perpendiculairement à la direction des tubes (3), lesquels sont raccordés à une boîte à fluide définie par le couvercle (13) et par où passe le liquide de refroidissement.

FIG.1

EP 0 285 504 A1

**Description**

ECHANGEUR DE CHALEUR, NOTAMMENT POUR LE REFROIDISSEMENT DE L'AIR DE SURALIMENTATION D'UN VEHICULE AUTOMOBILE

L'invention concerne un échangeur de chaleur pour l'échange de chaleur entre un premier courant de fluide et un second courant de fluide, comprenant un faisceau de tubes parallèles orientés selon une première direction et dans lesquels circule le premier fluide, les tubes traversant à étanchéité un collecteur à l'une au moins des extrémités du faisceau pour communiquer avec l'intérieur d'une boîte à fluide, le second courant de fluide circulant à l'extérieur des tubes dans une seconde direction transversale à la première et balayant des éléments d'échange thermique en contact thermique avec les tubes.

L'invention vise notamment un échangeur de chaleur servant au refroidissement d'un fluide, ici de l'air sortant d'un turbocompresseur et destiné à la suralimentation du moteur thermique d'un véhicule automobile.

Dans cette application, l'air de suralimentation constitue le second fluide, le premier fluide étant généralement le liquide de refroidissement du moteur.

Le but de l'invention est de réaliser un tel échangeur de chaleur d'une construction simple et compacte, et dans lequel le second fluide soit canalisé de façon efficace pour venir balayer les éléments d'échange thermique.

Ce résultat est obtenu selon l'invention grâce à un échangeur de chaleur du type défini en introduction, et qui comporte un caisson fermé par assemblage mutuel de deux parties dans la première direction, à l'intérieur duquel le faisceau de tubes est immobilisé dans la première direction entre les deux parties de caisson, le caisson présentant une entrée et une sortie pour le second courant de fluide et définissant pour celui-ci un passage garni par les éléments d'échange thermique sur la totalité de sa section transversale.

Selon un premier mode de mise en oeuvre de l'invention, les deux parties de caisson sont respectivement un bac formé d'un fond situé à l'une des extrémités du faisceau et d'une paroi latérale entourant celui-ci, et un couvercle situé à l'autre extrémité du faisceau.

Avantageusement, le couvercle est composé d'une plaque collectrice et d'une boîte à fluide assemblée de façon étanche à celle-ci, par exemple par soudage.

Cette forme de réalisation est applicable notamment lorsque les tubes ont une forme en U, les deux extrémités de chacun d'eux traversant la plaque collectrice du couvercle et la base du U étant tournée vers le fond du bac.

Selon un second mode de réalisation, les deux parties de caisson sont deux demi-caissons en forme de bac s'assemblant mutuellement par leurs bords, les tubes étant rectilignes et les deux extrémités de chacun d'eux traversant respectivement deux collecteurs.

D'autres caractéristiques et avantages de l'invention ressortiront de la description donnée ci-après de quelques exemples de réalisation, et des dessins annexés, dans lesquels :

    - les figures 1 et 2 sont respectivement une vue en perspective éclatée et une vue en élévation avec coupe partielle d'un premier mode de réalisation d'un échangeur de chaleur selon l'invention;

    - la figure 3 est une vue en coupe longitudinale représentant dans ses parties droite et gauche deux variantes de l'échangeur des figures 1 et 2;

    - la figure 4 est une vue partielle en coupe longitudinale d'une troisième variante;

    - les figures 5 à 7 sont des vues partielles en coupe longitudinale de trois autres variantes;

    - la figure 8 est une vue en perspective éclatée d'un second mode de réalisation d'un échangeur de chaleur selon l'invention; et

    - la figure 9 est une vue en élévation avec coupe partielle de l'échangeur de chaleur de la figure 8.

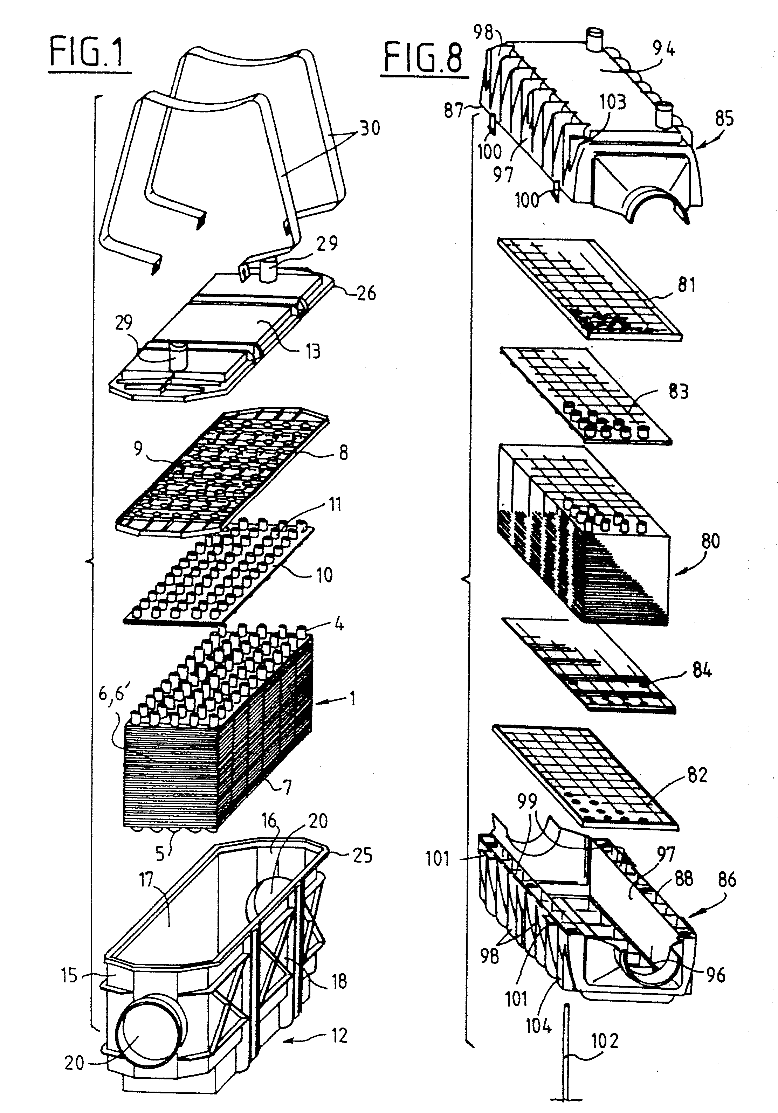

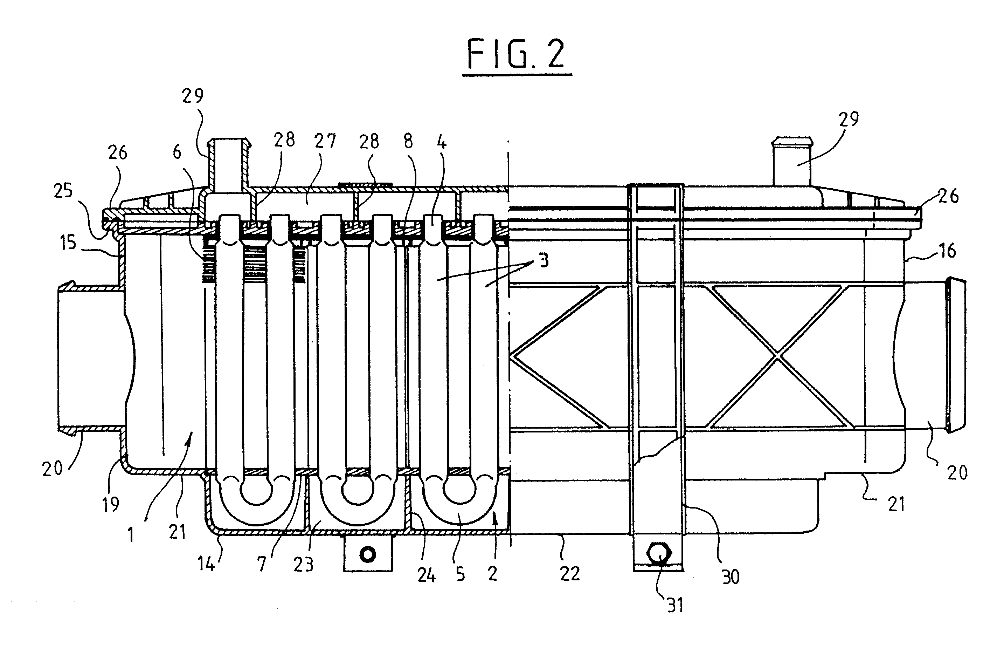

L'échangeur de chaleur représenté aux figures 1 et 2, destiné au refroidissement de l'air de suralimentation d'un moteur de véhicule automobile, comprend un faisceau de tubes désigné par la référence 1, composé d'une multiplicité de tubes 2 en forme de U, les branches 3 de tous les tubes étant verti cales avec leurs extrémités ouvertes 4 dirigées vers le haut et les bases 5 des tubes étant à la partie basse du faisceau. Les branches des tubes sont fixées, par exemple par expansion, dans des ailettes d'échange de chaleur 6 sous forme de feuilles métalliques planes et horizontales présentant des perforations pour le passage des tubes. Les ailettes 6 sont à une faible distance les unes des autres et forment ensemble un bloc parallélépipédique 6', les extrémités ouvertes 4 et les bases 5 des tubes faisant saillie respectivement sur les faces supérieure et inférieure du bloc. La face inférieure du bloc peut être recouverte d'une plaque en matière plas tique 7 également perforée et traversée par les tubes 2.

Sur les extrémités supérieures 4 des tubes est enfilée une plaque collectrice 8 présentant à cet effet des perforations pouvant être entourées par des collets 9. La face inférieure de la plaque 8 est recouverte d'une feuille d'élastomère 10 dont dépendent des manchons d'étanchéité 11 interposés entre les collets 9 et les extrémités 4 des tubes.

Le faisceau 1, la plaque collectrice 8 et la feuille d'élastomère 10 sont enfermés dans un caisson composé d'un bac 12 et d'un couvercle 13. Le bac 12 est lui-même formé d'un fond ou paroi inférieure 14 situé en regard des bases 5 des tubes et d'une paroi latérale présentant deux faces extrêmes opposées 15 et 16 et deux faces longitudinales opposées 17 et 18. La largeur interne du bac 12, c'est-à-dire la distance séparant les faces 17 et 18 qui sont planes intérieurement, est pratiquement égale à la dimension correspondante du bloc 6', tandis que la longueur interne du bac, c'est-à-dire la distance séparant les faces extrêmes 15 et 16, est plus grande que la dimension correspondante du bloc 6'. Deux espaces libres 19 subsistent donc dans le caisson aux extrémités du bac, dont l'un, adjacent à la face 15, est montré à la figure 2. L'autre espace 19 est adjacent à la face 16. Dans ces deux espaces libres débouchent des tubulures de passage d'air 20 qui se raccordent respectivement aux faces 15 et 16. L'une de ces tubulures est destinée à l'entrée et l'autre à la sortie de l'air de suralimentation à refroidir.

Les espaces libres 19 sont limités vers le bas par des parties 21 du fond 14 du bac qui sont situées dans le même plan que la plaque 7, la partie restante 22 du fond étant en retrait vers le bas de façon à définir un espace 23 pour le logement des bases 5 des tubes. La plaque 7 s'appuie par sa périphérie sur un épaulement du fond 14 situé au raccordement entre les parties 21 et 22, et s'appuie par ailleurs sur des nervures de renforcement 24 dépendant de la partie 22 et situées entre les rangées de tubes 2. La plaque 7 forme séparation entre d'une part l'espace occupé par le bloc 6' et les espaces libres 19 et, d'autre parti, l'espace 23 lui-même subdivisé par les nervures 24.

La plaque collectrice 8 a des dimensions correspondant sensiblement à la longueur et à la largeur du bac 12, de sorte que sa périphérie est adjacente au bord 25 entourant l'ouverture du bac. La plaque collectrice repose sur un épaulement prévu dans le bord 25.

Le couvercle 13 du caisson forme boîte à eau. Ses dimensions dans le plan horizontal correspondent à celles du bac 12 et son bord 26 vient reposer sur le bord 25 du bac auquel il est assemblé de façon étanche, par exemple par soudage. Le couvercle 13 est également assemblé par soudage à la périphérie de la plaque collectrice 8 pour fermer de façon étanche l'espace interne 27 de la boîte à eau. L'espace 27 est subdivisé en compartiments par des cloisons transversales 28 appartenant au couvercle 13 et séparant chacune les extrémités des deux branches 3 des tubes d'une même rangée transversale. Les deux compartiments extrêmes communiquent respectivement avec deux tubulures 29 prévues respectivement pour l'entrée du fluide de refroidissement dans l'échangeur et pour sa sortie de l'échangeur.

Deux cerceaux de maintien 30 sont serrés par des boulons 31 autour de la section transversale du caisson.

Le fonctionnement de l'échangeur de chaleur décrit est le suivant. Le liquide de refroidissement pénétrant par l'une des tubulures 29 dans le compartiment extrême correspondant de la boîte à eau passe dans les branches des tubes 2 qui débouchent dans ce compartiment, toutes ces branches appartenant à une première rangée transversale de tubes. Après avoir parcouru ces tubes d'une extrémité à l'autre, le liquide arrive dans le second compartiment d'où il pénètre dans les tubes de la seconde rangée. Ceci les amène dans le troisième compartiment, et ainsi de suite, la dernière rangée de tubes amenant le liquide dans le dernier compartiment de la boîte à eau d'où il sort par l'autre tubulure 29.

Dans le même temps, l'air de suralimentation pénètre par l'une des tubulures 20 dans l'espace libre 19 adjacent. Compte tenu de la disposition relative des différents éléments telle que décrite ci-dessus, pour passer de cet espace 19 à l'autre espace 19 adjacent à la tubulure 20 de sortie, l'air passe obligatoirement par un volume limité vers le bas par la plaque 7, vers le haut par la plaque collectrice 8 et latéralement par les faces 17 et 18 du bac, ce volume étant garni par les ailettes 6 sur toute sa section transversale. L'air cède donc de la chaleur au liquide de refroidissement par l'intermédiaire des ailettes et de la paroi des tubes en contact thermique avec celles-ci.

Le montage de l'échangeur de chaleur se fait de la façon suivante. On assemble le faisceau de tubes de manière classique, la plaque 7 étant enfilée sur les tubes avant l'ailette 6 inférieure. On introduit ensuite le faisceau dans le bac 12, la plaque 7 venant reposer par sa périphérie sur l'épaulement du fond 14 du bac. Le simple contact suffit pour empêcher des fuites d'air appréciables vers l'espace 23 compris entre la plaque 7 et le fond 14. Dans certains cas, l'étanchéité de la liaison entre la plaque 7 et le fond 14 peut être réalisée par collage.

La feuille d'élastomère 10 et la plaque collectrice 8 peuvent être mises en place sur les extrémités des tubes avant ou après l'introduction du faisceau dans le bac. A l'issue de ces deux opérations, la plaque collectrice 8 se trouve en travers de l'ouverture du bac, sa périphérie reposant sur l'épaulement du bord 25 de ce dernier. On recouvre ensuite le bord du bac et la plaque collectrice par la boîte à eau 13, et on assemble cette dernière par soudage par friction simultanément au bord 25 et à la périphérie de la plaque collectrice, en faisant vibrer la boîte à eau par rapport à l'ensemble rigide constitué par le bac et le faisceau de tubes. On met enfin en place les cerceaux 30 qu'on serre autour du caisson au moyen des boulons 31.

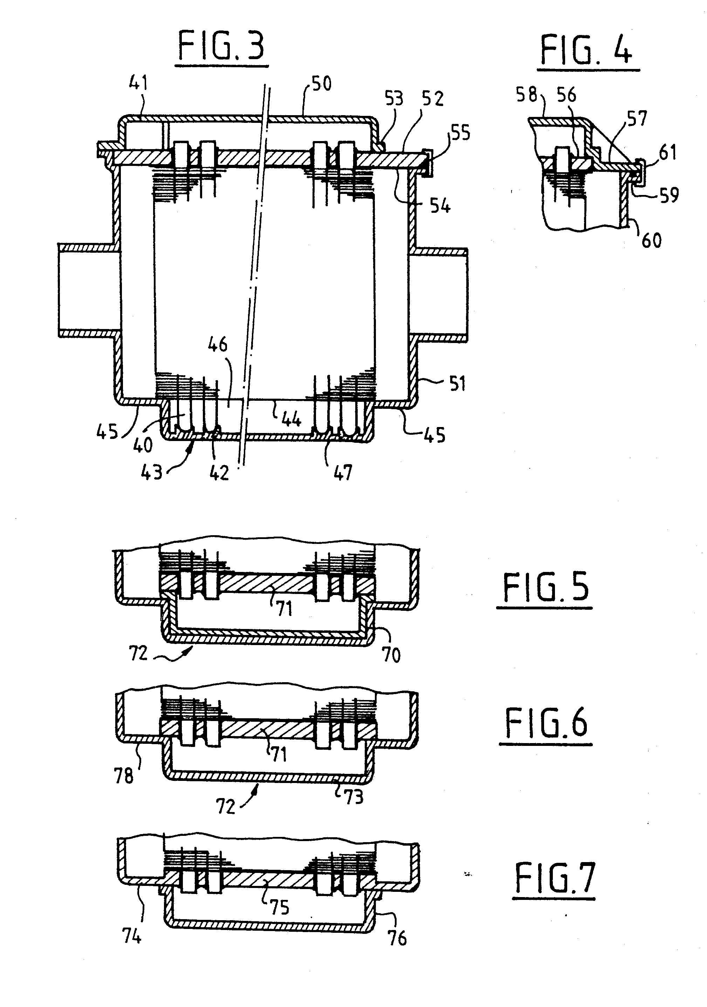

L'échangeur de chaleur représenté à la partie gauche de la figure 3 présente une structure générale semblable à celle de l'échangeur des figures 1 et 2. Les différences essentielles entre les deux dispositifs sont les suivantes :

Les deux branches de chacun des tubes en U 40 de l'échangeur de la figure 3 sont juxtaposées dans la direction transversale de l'échangeur, c'est-à-dire dans la direction perpendiculaire à la direction générale de la circulation de l'air, alors qu'elles sont juxtaposées dans cette dernière direction ou direction longitudinale dans l'exemple des figures 1 et 2. Les bases des tubes en U 40 reposent sur des saillies 42 du fond 43 du bac. La plaque 7 est supprimée et l'ailette inférieure 44 du faisceau de tubes repose directement sur les parties les plus élevées 45 du fond 43 et forme un couvercle pour l'espace 46 défini par la partie abaissée 47 du fond et logeant la base des tubes.

Toutes les particularités qui viennent d'être décrites pour la variante illustrée dans la partie gauche de la figure 3 se retrouvent également dans la variante de la partie droite de cette figure. En outre, dans cette dernière, la longueur de la boîte à eau 50 est inférieure à celle du bac 51 contenant le faisceau de tubes et sensiblement égale à la dimension correspondante de ce faisceau. La plaque collectrice 52 est assemblée d'une part au bord 53 de la boîte à eau par soudage par friction, d'autre part par sa périphérie au bord du bac 51, par liaison mécanique avec interposition d'un joint d'étanchéité constitué par le prolongement de la feuille d'élastomère 54 recouvrant la plaque collectrice, ce joint présentant un épaississement 55 logé dans une gorge de la plaque collectrice en regard du bord du bac.

L'assemblage par soudage de la boîte à eau à la plaque collectrice peut se faire avant ou après la mise en place de cette dernière sur le bord du bac. L'assemblage de ces deux derniers éléments est réalisé dans l'exemple illustré par des moyens mécaniques, à savoir des agrafes, mais peut l'être évidemment par tous autres moyens d'assemblage tels que soudage par exemple.

La variante illustrée à la figure 4 diffère de celle de la partie droite de la figure 3 en ce que les dimensions de la plaque collectrice 56 sont limitées à peu près aux dimensions du faisceau de tubes dans un plan horizontal et qu'un rebord 57 de la boîte à eau 58 s'étend au-delà de la plaque collectrice 56 dans le plan de celle-ci pour venir reposer par sa périphérie sur le bord 59 du bac 60. Un joint d'étanchéité 61, indépendant de la feuille d'élastomère recouvrant la plaque collectrice, est logé dans une gorge ménagée dans le bord 59 en regard du rebord 57 de la boîte à eau. La fermeture du bac s'effectue par l'ensemble préalablement soudé de la plaque collectrice et de la boîte à eau.

Chacune des figures 5 à 7 montre en coupe longitudinale la partie inférieure d'un échangeur de chaleur qui peut être semblable par ailleurs à l'un quelconque de ceux illustrés aux figures 3 et 4. Contrairement à ceux de la figure 3, les échangeurs de chaleur des figures 5 à 7 comportent des tubes rectilignes reliant une boîte à fluide supérieure et une boîte à fluide inférieure.

A la figure 5, la boîte à fluide inférieure est constituée par une pièce indépendante 70 en forme de bac assemblée par soudage par friction, par son bord, à la périphérie d'une plaque collectrice 71 de forme rectangulaire dont les dimensions correspondent à celles du faisceau de tubes. La boîte à fluide 70 repose sur le fond 72 du bac constitutif du caisson, lequel fond est identique au fond 43 de la figure 3, sous réserve de la suppression des saillies 42 supportant la base des tubes en U. La boîte à fluide 70 épouse la surface interne du fond 72, interdisant à l'air qui circule dans l'échangeur de passer au-dessous de la plaque collectrice 71 et l'obligeant par conséquent à traverser le faisceau de tubes. Dans cette variante, l'assemblage de la boîte à eau sur la plaque collectrice inférieure intervient naturellement avant l'introduction du faisceau de tubes dans le bac.

Dans la variante de la figure 6, la plaque collectrice 71, identique à celle de la figure 5, repose directement sur un épaulement 78 du fond 72 du bac, lui-même identique à celui de la figure 5. Ces deux éléments sont assemblés par soudage par friction entre eux avant la fermeture du bac. La boîte à fluide inférieure est formée par la partie abaissée 73 du fond 72, dont les dimensions horizontales sont légèrement inférieures à celles de la plaque collectrice 71.

A la figure 7, le fond 74 du bac est plat mais perforé et épaissi sur une étendue correspondant aux dimensions du faisceau de tubes pour former un collecteur 75. Une boîte à eau 76 est assemblée par soudage par friction sur la face extérieure du fond. Cet assemblage par soudage peut se faire à un moment quelconque de l'assemblage de l'échangeur de chaleur.

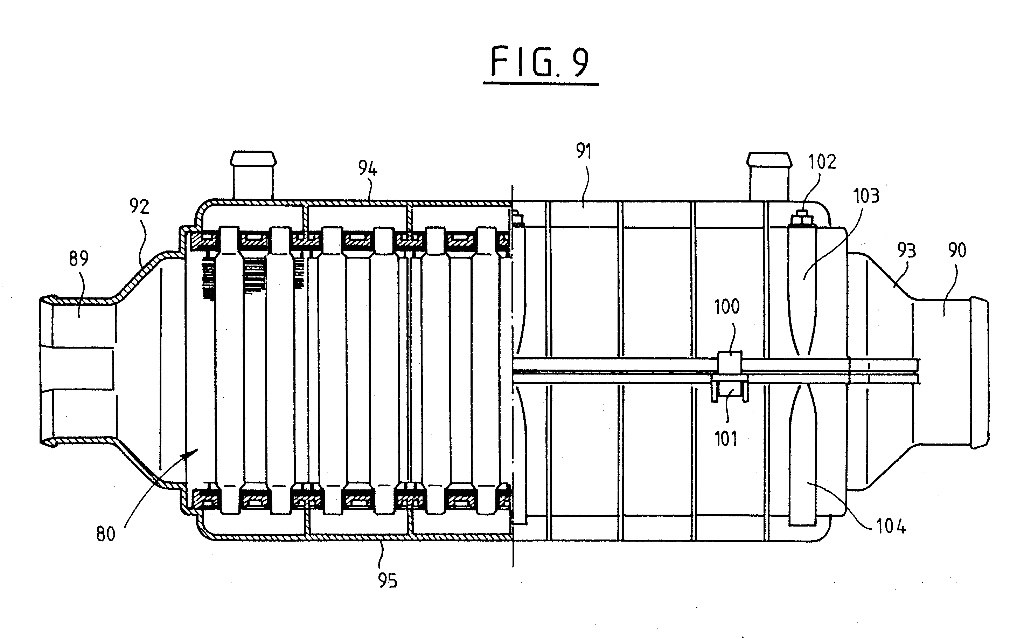

L'échangeur de chaleur représenté aux figures 8 et 9 comprend un faisceau 80 composé de tubes rectilignes et d'ailettes, semblable à celui des échangeurs des figures 5 à 7. Sur les extrémités des tubes, dépassant en haut et en bas des ailettes, sont enfilées deux plaques collectrices 81 et 82 et deux feuilles d'élastomère 83 et 84 formant manchons d'étanchéité, de la façon décrite plus haut pour la plaque collectrice 8 et la feuille d'élastomère 10 de la figure 1. Les plaques collectrices et les feuilles d'élastomère ont un contour rectangulaire dont les dimensions sont sensiblement égales à celles des ailettes. L'ensemble ainsi constitué est enfermé dans un caisson formé de deux demi-caissons supérieur 85 et inférieur 86 en forme de bacs, assemblés mutuellement par leurs bords respectifs 87 et 88. Le caisson a une forme générale tubulaire de section transversale variant selon sa longueur, les bords jointifs 87 et 88 s'étendant dans un plan de symétrie longitudinal horizontal du caisson. La forme tubulaire comprend des portions cylindriques d'extrémités 89 et 90 formant tubulures d'entrée et de sortie pour l'air à refroidir, une portion médiane 91 à section rectangulaire de côtés supérieurs au diamètre des tubulures 89 et 90, entourant le faisceau de tubes, et des portions 92 et 93 de raccordement entre la section médiane 91 et les tubulures d'entrée et de sortie.

Les plaques collectrices 81 et 82 sont assemblées par soudage par friction, par leur périphérie, respectivement aux fonds 94 et 95 des demi-caissons 85 et 86. La périphérie de la plaque collectrice 82 repose sur un épaulement 96 entourant la partie du fond 95 correspondant à la portion médiane 91 du caisson 86. Cette partie du fond définit une boîte à fluide inférieure pour le circuit de liquide de refroidissement. Un épaulement identique est prévu dans le fond 94 du demicaisson 85 pour recevoir la plaque collectrice supérieure 81.

Les parois latérales longitudinales 97 des demi-caissons présentent des faces internes planes définissant pour la section rectangulaire de la portion 91 une largeur intérieure égale à la dimension correspondante du faisceau de tubes 80, dont les ailettes sont par conséquent reçues pratiquement sans jeu dans le caisson. Comme dans le cas des échangeurs décrits précédemment, l'air de suralimentation envoyé dans cet échangeur traverse nécessairement le faisceau de tubes 80 pour passer de l'un à l'autre des espaces libres définis par les portions de raccordement 92 et 93 du caisson.

Des nervures de renforcement 98 prévues extérieurement sur les faces latérales 97 des demi-caissons définissent des volumes fermés 99 dans lesquels ne circule aucun fluide. Les parois latérales 97 des demi-caissons 85 et 86 sont munies de pattes de verrouillage mutuel 100 et 101 au voisinage de leurs bords, ainsi que de bossages 103 et 104 traversés par des tirants 102 pour tenir les demi-caissons solidement assemblés.

On retrouve dans l'échangeur des figures 8 et 9, pour chacun des deux demi-caissons, une structure de fond formant boîte à eau semblable à celle représentée à la figure 6 pour le fond du bac. Il est possible, en variante, de prévoir des structures de fonds semblables à celles des figures 5 et 7.

Dans les échangeurs à deux boîtes à fluide et tubes droits, les tubulures d'entrée et de sortie du premier fluide peuvent être prévues sur le même demi-caisson, comme représenté aux figures 8 et 9, ou respectivement sur les deux demi-caissons.

## Revendications

1. Echangeur de chaleur pour l'échange de chaleur entre un premier courant de fluide et un second courant de fluide, comprenant un faisceau de tubes parallèles orientés selon une première direction et dans lesquels circule le premier fluide, les tubes traversant à étanchéité un collecteur à l'une au moins des extrémités du faisceau pour communiquer avec l'intérieur d'une boîte à fluide, le second courant de fluide circulant à l'extérieur des tubes dans une seconde direction transversale à la première et balayant des éléments d'échange thermique en contact thermique avec les tubes, caractérisé en ce qu'il comporte un caisson fermé par assemblage mutuel des deux parties (12, 13 ; 85, 86) dans la première direction, à l'intérieur duquel le faisceau de tubes est immobilisé dans la première direction entre les deux parties de caisson, le caisson présentant une entrée et une sortie (20) pour le second courant de fluide et définissant pour celui-ci un passage garni par les éléments d'échange thermique sur la totalité de sa section transversale.

2. Echangeur de chaleur selon la revendication 1, caractérisé en ce que les deux parties de caisson sont respectivement un bac (12) formé d'un fond (14) situé à l'une des extrémités du faisceau et d'une paroi latérale (15-18) entourant celui-ci, et un couvercle (13) situé à l'autre extrémité du faisceau.

3. Echangeur de chaleur selon la revendication 2, caractérisé en ce que le couvercle est composé d une plaque collectrice (8) et d'une boîte à fluide (13) assemblée de façon étanche à celle-ci.

4. Echangeur de chaleur selon la revendication 3, caractérisé en ce que la boîte à fluide est assemblée au bord du bac et à la périphérie de la plaque collectrice, adjacente audit bord.

5. Echangeur de chaleur selon la revendication 3, caractérisé en ce que la plaque collectrice (52) s étend au-delà du bord de la boîte à fluide (50) et est assemblée de façon étanche par sa périphérie au bord du bac (51).

6. Echangeur de chaleur selon la revendication 3, caractérisé en ce que la boîte à fluide (58) s'étend au-delà de la périphérie de la plaque collectrice (56) selon le plan de celle-ci et est assemblée de façon étanche par son bord au bord (59) du bac (60).

7. Echangeur de chaleur selon l'une des revendications 3 à 6, caractérisé en ce que les tubes (2) ont une forme en U, les deux extrémités (4) de chacun d'eux traversant la plaque collectrice (8) du couvercle et la base (5) du U étant tournée vers le fond (14) du bac et en ce que la base des tubes s'appuie sur le fond du bac.

8. Echangeur selon la revendication 1, caractérisé en ce que les deux parties de caissons sont deux demi-caissons (85, 86) en forme de bacs s'assemblant mutuellement par leurs bords (87, 88) et que les tubes sont rectilignes, les deux extrémités de chacun d'eux traversant respectivement deux collecteurs (81, 82).

9. Echangeur de chaleur selon la revendication 8, caractérisé en ce que le fond (72) du bac ou de chaque demi-caisson s'appuie sur une boîte à fluide (70) disposée à l'intérieur du caisson.

10. Echangeur de chaleur selon la revendication 9, caractérisé en ce que la boîte à fluide disposée à l'intérieur du caisson est assemblée de façon étanche au collecteur correspondant sous forme de plaque collectrice (71).

11. Echangeur de chaleur selon la revendication 8, caractérisé en ce que le fond (72) du bac ou de chaque demi-caisson forme boîte à fluide et est assemblé de façon étanche au collecteur correspondant sous forme de plaque collectrice (71).

12. Echangeur de chaleur selon la revendication 8, caractérisé en ce que le fond (74) du bac ou de chaque demi-caisson forme collecteur (75) et est assemblé de façon étanche à une boîte à fluide (76) disposée à l'extérieur du caisson.

13. Echangeur de chaleur selon l'une des revendications précédentes, caractérisé en ce que la face du collecteur (8) ou de chaque collecteur (81, 82) tournée vers l'intérieur du caisson est recouverte d'une feuille d'élastomère (10, 83, 84) dont dépendent des manchons (11) d'étanchéité qui traversent l'épaisseur du collecteur en entourant les tubes.

14. Echangeur de chaleur selon la revendication 13 et la revendication 5, caractérisé en ce que la feuille d'élastomère s'étend jusqu'à l'interface entre la plaque collectrice (52) et le bord du bac (51) et sert de joint d'étanchéité (55) entre ceux-ci.

0285504

FIG.1

FIG.8

# FIG. 2

0285504

0285504

FIG.3

FIG. 4

FIG.5

FIG.6

FIG.7

# FIG. 9

0285504

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 656 544  (HOWE) <br> * Abstract; figures 1-3 * <br> --- | 1-4 | F 28 D   7/16 <br> F 28 D   7/06 <br> F 28 F   9/00 |
| Y | US-A-4 474 162  (MASON) <br> * Abstract; figure 1 * <br> --- | 1-4 | |
| A | DE-A-2 930 577  (WIESSNER) <br> * Figures 4,5 * <br> --- | 5 | |
| A | EP-A-0 149 767  (MTU MOTOREN- UND TURBINEN-UNION MÜNCHEN GmbH) <br> * Figure 1 * <br> --- | 1,7 | |
| A | US-A-3 739 443  (FRIEDMAN) <br> * Colonne 2, lignes 52-63; figures 4-8 * <br><br> --- | 8 | |
| A | US-A-3 667 541  (HOWE) <br> --- | | |
| A | US-A-4 191 148  (PATEL et al.) <br> ----- | | |

| DOMAINES TECHNIQUES RECHERCHES (Int. Cl.4) |
|---|
| F 28 D <br> F 28 F <br> F 02 B |

Le présent rapport a été établi pour toutes les revendications

| Lieu de la recherche | Date d'achèvement de la recherche | Examinateur |
|---|---|---|
| LA HAYE | 17-06-1988 | HOERNELL, L.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................
& : membre de la même famille, document correspondant

EPO FORM 1503 03.82 (P0402)